# EUROPEAN PATENT APPLICATION

(11) **EP 4 510 740 A1**
(43) Date of publication of application: **19.02.2025**
(21) Application number: 22937474.9
(22) Date of filing: 14.04.2022
(51) Int. Cl.: H04W 72/0457, H04W 16/14

(54) **TERMINAL, BASE STATION, AND COMMUNICATION METHOD**

(71) Applicant: NTT DOCOMO, INC., Tokyo 100-6150 (JP)
(72) Inventor: HARADA, Hiroki, Tokyo 100-6150 (JP); OKANO, Mayuko, Tokyo 100-6150 (JP)
(74) Representative: Hoffmann Eitle
(86) International application number: PCT/JP2022/017878
(87) International publication number: WO 2023/199495

(57) **Abstract**

A terminal includes: a control unit configured to assume that there are a scheduling cell and a scheduled cell in multi-carrier scheduling by single control information; and a reception unit configured to receive the single control information from the scheduling cell. The reception unit receives a plurality of scheduled cells based on the single control information, and the control unit determines whether or not an unlicensed frequency cell can be configured as the scheduling cell.

## Description

### FIELD OF THE INVENTION

The present invention relates to a terminal, a base station and a communication method in a wireless communication system.

### BACKGROUND OF THE INVENTION

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1).

In addition, discussions on 6G as the next generation wireless communication method to 5G have been started, and the radio quality exceeding 5G is expected to be achieved. For example, in 6G, discussions are being held aiming at, for example, further increase in capacity, use of a new frequency band, further reduction in latency, further increase in reliability, further reduction in power consumption, coverage enhancement in the new domains (high altitude, the ocean, and the space) according to the non-terrestrial network, or the like (for example, non-patent document 2).

### CITATION LIST

### Non-Patent Document

Non-Patent Document 1: 3GPP TS 38.300 V16.8.0 (2021-12)
Non-Patent Document 2: 3GPP TR 38.821 V16.1.0 (2021-05)
Non-Patent Document 3: 3GPP TS 37.213 V16.7.0 (2021-12)
Non-Patent Document 4: 3GPP TS 38.214 V16.8.0 (2021-12)
Non-Patent Document 5: 3GPP TS 38.306 V16.7.0 (2021-12)
Non-Patent Document 6: 3GPP TS 38.213 V16.8.0 (2021-12)
Non-Patent Document 7: 3GPP TS 38.212 V16.8.0 (2021-12)

### SUMMARY OF THE INVENTION

### TECHNICAL PROBLEM

Enhancement of a multi-carrier operation is being discussed. In this discussion, a method of scheduling a physical downlink shared channel or a physical uplink shared channel by single DCI (Downlink Control Information) in multi-carrier is being discussed. In addition, in some frequency bands among the frequency bands in which 5G or 6G is available, an unlicensed band is defined. In the unlicensed band, various regulations are specified, and, for example, an LBT (Listen before talk) is to be performed at the time of channel access.

Here, in a case where multi-carrier scheduling is performed in an unlicensed band, a procedure in which LBT is taken into account is required to be performed.

The present invention has been made in view of the foregoing points and it is an object of the present invention to perform multi-carrier scheduling in an unlicensed band.

### SOLUTION TO PROBLEM

According to the disclosed technique, a terminal is provided. The terminal includes: a control unit configured to assume that there are a scheduling cell and a scheduled cell in multi-carrier scheduling by single control information; and a reception unit configured to receive the single control information from the scheduling cell. The reception unit receives a plurality of scheduled cells based on the single control information, and the control unit determines whether or not an unlicensed frequency cell can be configured as the scheduling cell.

### ADVANTAGEOUS EFFECTS OF INVENTION

According to the disclosed technique, multi-carrier scheduling can be performed in an unlicensed band.

### BRIEF DESCRIPTION OF THE DRAWINGS

[Fig. 1] is a drawing illustrating a configuration example (1) of a wireless communication system in an embodiment of the present invention.
[Fig. 2] is a drawing illustrating a configuration example (2) of a wireless communication system in an embodiment of the present invention.
[Fig. 3] is a drawing illustrating an example (1) of a scheduling operation.
[Fig. 4] is a drawing illustrating an example (2) of a scheduling operation.
[Fig. 5] is a drawing illustrating an example (3) of a scheduling operation.
[Fig. 6] is a drawing illustrating an example of a frequency band in an embodiment of the present invention.
[Fig. 7] is a drawing illustrating an example of LBT in an embodiment of the present invention.
[Fig. 8] is a sequence diagram for describing an example of a scheduling operation in an embodiment of the present invention.
[Fig. 9] is a drawing illustrating an example of a functional structure of a base station 10 related to an embodiment of the present invention.
[Fig. 10] is a drawing illustrating an example of a functional structure of a terminal 20 related to an embodiment of the present invention.
[Fig. 11] is a drawing illustrating an example of a hardware structure of the base station 10 or the terminal 20 related to an embodiment of the present invention.
[Fig. 12] is a drawing illustrating an example of a structure of a vehicle 2001 in an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, radio (wireless) parameters are "configured (set)" may mean that a predetermined value is pre-configured, or may mean that a radio parameter indicated by a base station 10 or a terminal 20 is configured.

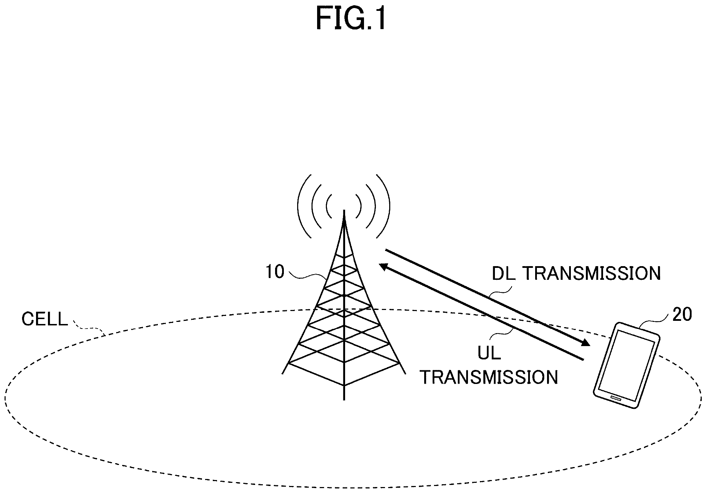

Fig. 1 is a drawing illustrating a configuration example (1) of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, an NR-PSS and an NR-SSS. The system information is transmitted via, for example, a NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

The terminal 20 is capable of performing carrier aggregation in which a plurality of cells (a plurality of CCs (Component Carrier)) are bundled for performing communication with the base station 10. In the carrier aggregation, one PCell (Primary cell) and one or more SCells (Secondary cell) are used. In addition, PUCCH-SCell having PUCCH may be used.

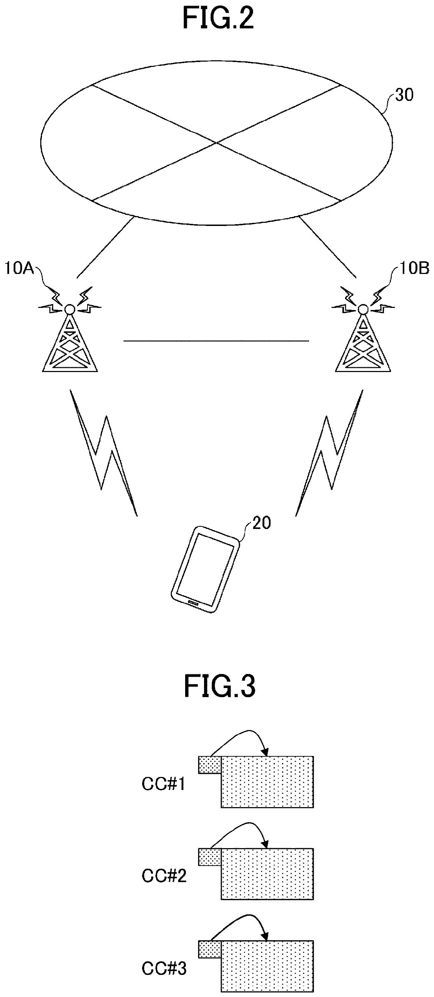

Fig. 2 is a drawing illustrating an example (2) of a wireless communication system according to an embodiment of the present invention. Fig. 2 shows an example of a configuration of a wireless communication system in a case where DC (Dual connectivity) is performed. As shown in Fig. 2, a base station 10A serving as an MN (Master Node) and a base station 10B serving as an SN (Secondary Node) are provided. The base station 10A and the base station 10B are each connected to a core network. The terminal 20 is enabled to communicate with both the base station 10A and the base station 10B.

A cell group provided by the base station 10A that is an MN is called an MCG (Master Cell Group), and a cell group provided by the base station 10B that is an SN is called an SCG (Secondary Cell Group). In addition, in DC, the MCG includes one PCell and one or more SCells, and the SCG includes one PSCell (Primary SCG Cell) and one or more SCells.

Processing operations in an embodiment of the present invention may be performed in a system configuration shown in Fig. 1, in a system configuration shown in Fig. 2, or in other system configurations.

Enhancement of a multi-carrier operation is being discussed. In this discussion, a method of multi-cell PDSCH or PUSCH scheduling by a single DCI (Downlink Control Information) is being discussed. Hereinafter, "PDSCH or PUSCH" will be also described as "PDSCH/PUSCH".

In the multi-cell scheduling, the intra-band carrier aggregation and the inter-band carrier aggregation are both being discussed. In addition, in the multi-cell scheduling, using both FR1 (Frequency Range 1) and FR2 (Frequency Range 2) is being discussed. Hereinafter, the multi-cell scheduling can be replaced with the multi-carrier scheduling.

In a case of scheduling PDSCH/PUSCH of a plurality of CCs by a single DCI, there is an advantageous point that the load of DCI (PDCCH) monitoring (for example, the number of blind decodings) can be reduced as compared with a method of scheduling CCs one by one by preparing a DCI for each of the CCs. In addition, the more the size of the single DCI becomes smaller compared with the size of the conventional DCI multiplied by the number of CCs, the more the total PDCCH overhead becomes smaller. On the other hand, there is a disadvantageous point that indication contents cannot be flexibly changed for each of the CCs. In a case where flexible changing of indication contents is enabled, the size of the single DCI becomes large, and thus, the PDCCH error rate will be worsened and the overhead will be increased. In addition, in a case where there is an error of PDCCH decoding, data reception of all of a plurality of CCs will fail.

Fig. 3 is a drawing illustrating an example (1) of a scheduling operation. As illustrated in Fig. 3, in the conventional self-carrier scheduling, PDCCH and DCI are transmitted for each of the CCs and PDSCH/PUSCH is scheduled for the CC.

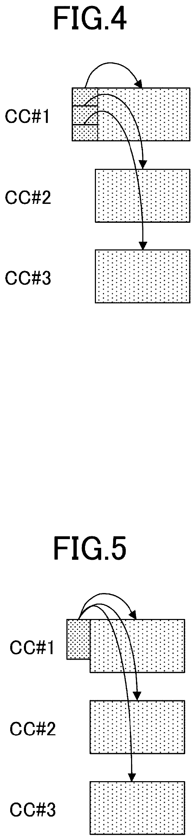

Fig. 4 is a drawing illustrating an example (2) of a scheduling operation. As illustrated in Fig. 4, in the conventional cross-carrier scheduling, PDSCH/PUSCH is scheduled for each CC by PDCCH and DCI in another CC.

Fig. 5 is a drawing illustrating an example (3) of a scheduling operation. As illustrated in Fig. 5, in the multi-carrier scheduling, a single DCI schedules PDSCH/PUSCH for each CC.

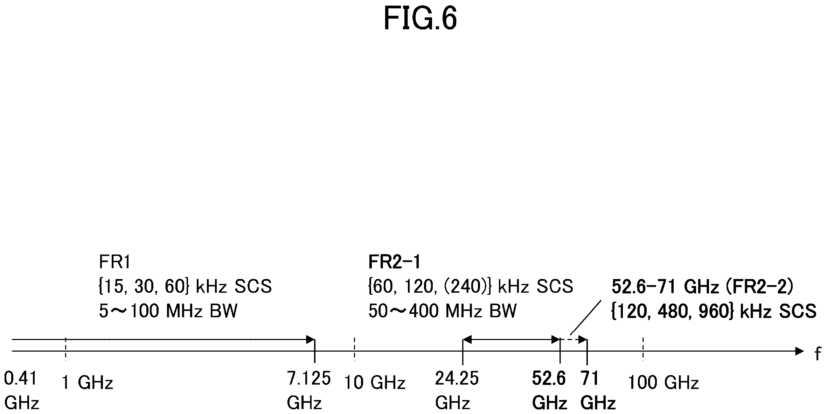

Fig. 6 is a drawing illustrating an example of a frequency band in an embodiment of the present invention. As illustrated in Fig. 6, FRs are specified. In FR1 up to 7.125 GHz, the subcarrier spacing is 15 kHz, 30 kHz, or 60 kHz, and the bandwidth is from 5 to 100 MHz. In FR2-1 from 24.25 GHz to 52.6 GHz, the subcarrier spacing is 60 kHz, 120 kHz, or 240 kHz, and the bandwidth is from 50 MHz to 400 MHz. In FR2-2 from 52.6 GHz to 71 GHz, the subcarrier spacing is 120 kHz, 480 kHz, or 960 kHz.

For example, a band from 5.15 GHz to 5.35 GHz, a band from 5.47 GHz to 5.725 GHz, a band that is equal to or higher than 5.925 GHz, or the like is expected as an example of an unlicensed band in the 5 GHz to 7 GHz band.

For example, a band from 59 GHz to 66 GHz, a band from 57 GHz to 64 GHz or 66 GHz, a band from 59.4 GHz to 62.9 GHz, or the like is expected as an example of an unlicensed band in the 60 GHz band.

In the unlicensed band, various regulations are specified so as to avoid influence to another system or another device.

For example, in the 5 GHz to 7 GHz band, an LBT (Listen before talk) is to be performed when accessing a channel. The base station 10 or the terminal 20 performs power detection in a predetermined period immediately before transmission, and stops the transmission in a case where the power exceeds a predetermined value, that is, in a case where transmission from another device is detected. In addition, the maximum channel occupancy time (MCOT) is specified. MCOT is a maximum time duration in which transmission continuation is allowed in a case where transmission is started after the LBT. In addition, in a case where the transmission uses a carrier bandwidth, X% or more of the bandwidth must be used as the occupied channel bandwidth (OCB) requirements. For example, in Europe, as much as 80% to 100% of NCB (nominal channel bandwidth) is required to be used. The purpose of the OCB requirements is that the channel access power detection is to be performed correctly. In addition, with respect to the maximum transmission power and the maximum power spectral density, it is specified that the transmission is to be performed with predetermined transmission power or less. For example, in Europe, the maximum transmission power is 23 dBm in the 5150 MHz to 5350 MHz band. In addition, for example, in Europe, the maximum power spectral density is 10 dBm/MHz in the 5150 MHz to 5350 MHz band.

For example, in the 60 GHz band, an LBT is to be performed when accessing a channel. The base station 10 or the terminal 20 performs power detection in a predetermined period immediately before transmission, and stops the transmission in a case where the power exceeds a predetermined value, that is, in a case where transmission from another device is detected. In addition, with respect to the maximum transmission power and the maximum power spectral density, it is specified that the transmission is to be performed with predetermined transmission power or less.

There are four types of channel access procedures defined in NR as described below based on the behavior difference with respect to the LBT time report (duration for performing sensing).
Type 1) Variable duration of sensing is performed before transmission. Also referred to as category-4 LBT.
Type 2A) 25 µs of sensing is performed before transmission. Also referred to as category-2 LBT.
Type 2B) 16 µs of sensing is performed before transmission. Also referred to as category-2 LBT.
Type 2C) Start transmission without LBT. The same as the transmission in the licensed band.

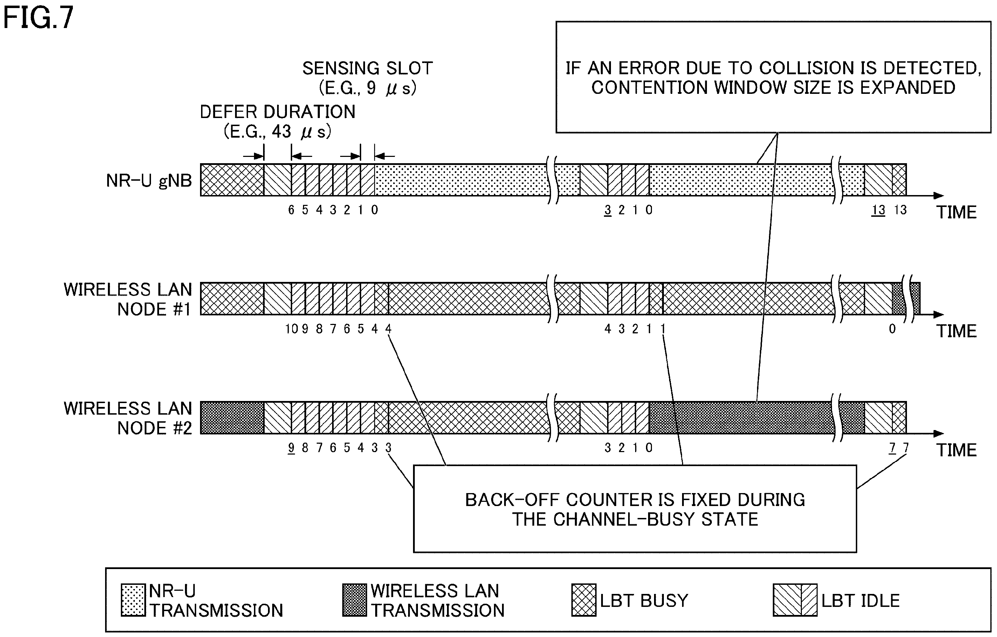

Fig. 7 is a drawing for describing an example of LBT in an embodiment of the present invention. Fig. 7 is an example of Type 1 channel access procedure. Type 1 is further classified into four classes indicating the channel access priority classes based on the sensing length difference. Sensing is performed in the following two durations.

The first duration is a prioritization period or a defer duration, and has a length of 16 + 9×mₚ [µs]. With respect to the mₚ, a fixed value is defined for each of the channel access priority classes.

The second duration is a backoff procedure, and has a length of 9×N [µs]. The value of N is randomly determined from a certain range (refer to Non-Patent Document 3).

With respect to the above, the 9 µs sensing duration may be referred to as a sensing slot duration.

In an example of Fig. 7, mₚ is equal to 3 and the defer duration is 43 µs. As illustrated in Fig. 7, the backoff counter is fixed during the channel-busy state. In addition, as illustrated in Fig. 7, transmission of NR-U gNB collides with that of wireless LAN node #2, and, if an error is detected, the contention window size is expanded from 3 to 13 for the NR-U gNB.

In addition, in the 3GPP release 16, in NR-U for FR1, RB sets and intra-cell guard bands (refer to Non-Patent Document 4) are defined. In a case of a CC bandwidth that is wider than the LBT bandwidth (that is, an RB set of 20 MHz), there may be a case in which the transmission availability is different for each of the RB sets. The terminal 20 reports, to the network, whether or not the terminal 20 supports PDSCH reception using only a part of the RB sets for which LBT is successful by using the UE capability parameter dl-ReceptionLBT-subsetRB-r16 (refer to Non-Patent Document 5). PUSCH transmission is not allowed unless LBT for all of the RB sets is successful (refer to Non-Patent Document 3).

In addition, the channel access procedure for multi-channel transmission is defined (refer to Non-Patent Document 3).
DL Type A1: LBT is performed independently for each channel. The random backoff counter is configured for each channel.
DL Type A2: LBT is performed independently for each channel. The random backoff counter is a random backoff counter of a channel with the largest CW size.
DL Type B1: LBT is performed for a representative channel, and, if the LBT is successful, short-time LBT is performed for the remaining channels. A common random backoff counter is configured, and the CW size is increased in a case where 80% or more is NACK.
DL Type B2: LBT is performed for a representative channel, and, if the LBT is successful, short-time LBT is performed for the remaining channels. The random backoff counter is configured for each channel.
UL: LBT is performed independently for each channel. The random backoff counter is configured for each channel.

In addition, the Type 2 HARQ codebook (refer to Non-Patent Document 6) is being enhanced. The PDSCH-to-HARQ feedback timing indicator value can be configured to be an inapplicable value at the time of scheduling, and thereby, the feedback for a plurality of PDSCHs can be collectively triggered by a DCI that is transmitted at another timing.

In addition, the Type 3 HARQ codebook (refer to Non-Patent Document 6) is supported. HARQ-ACKs of all HARQ processes can be collectively triggered.

In addition, in the 3GPP release 17, the channel access procedure for multi-channel transmission is defined in NR-U for FR2-2 (for example, 60 GHz band) (refer to Non-Patent Document 3). In this procedure, LBT is performed independently for each channel. In addition, the LBT mode configuration (refer to Non-Patent Document 3) is defined. Whether LBT is to be performed or is to be not performed is changed based on whether or not the LBT mode is configured by SIB1 or RRC signaling. For example, the LBT mode is not configured in a licensed-band cell.

In addition, as a DCI design for multi-carrier scheduling, with respect to at least one field in the DCI used for multi-carrier scheduling, whether the value is to be indicated for each of the CCs to be scheduled or the value is to be commonly indicated among the CCs to be scheduled may be determined depending on a specific condition. The specific condition may be, for example, a condition of whether or not the scheduling is for intra-band, the scheduling is for inter-band, the scheduling is for FR1, the scheduling is for FR2, the number of CCs is a predetermined number, the SCS is a predetermined SCS, or the like.

For example, whether at least one field is to be commonly indicated among the CCs or is to be indicated for each of the CCs may be determined depending on whether the CCs to be scheduled include only licensed CCs, include an unlicensed CC, or include only unlicensed CCs.

For example, the PDSCH-to-HARQ feedback timing indicator may be always assumed to be common among the CCs, that is, a single field or value. Which PDSCH is to be used as a reference for interpreting the field value of the PDSCH-to-HARQ feedback timing indicator may be defined in the technical specification or may be configured by the base station 10. For example, a cell for transmitting PUCCH may be used as a reference, or a PDSCH of the most recent timing may be used as a reference.

For example, from among the DCI fields (refer to Non-Patent Document 7), fields of One-shot HARQ-ACK request, Enhanced Type 2 codebook indicator, PDSCH group index, New feedback indicator, and ChannelAccess-CPext may be always assumed to be common among the CCs, or these fields are not required to be assumed for the multi-carrier scheduling DCI.

For example, from among the DCI fields (refer to Non-Patent Document 7), fields of DFI flag and ChannelAccess-CPext-CAPC may be always assumed to be common among the CCs, may be assumed to be indicated for a specific CC, may be assumed to be indicated for all of the CCs to be scheduled, may be assumed to be indicated for each CC, each of a plurality of scheduled CCs may be defined to be specified by each field, the target CC may be switched in accordance with a specific condition, or these fields are not required to be assumed for the multi-carrier scheduling DCI. The specific condition may be a condition of the maximum number of scheduled CCs configured by RRC, a condition of whether or not the scheduling is for intra-band, or a condition of whether or not the scheduling is for inter-band.

For example, the multi-carrier scheduling DCI may be defined to be applicable or not according to at least one of the following conditions. For example, the multi-carrier scheduling DCI may be applicable only in a case where only specific CCs are included in the scheduled CCs. The specific CCs may be, for example, CCs that do not include an unlicensed frequency, or may be CCs that do not include both a licensed frequency and an unlicensed frequency.

In addition, the base station 10 may configure, for the terminal 20, the scheduling cell used for multi-carrier PDSCH/PUSCH scheduling as a configuration of a scheduling cell for multi-carrier scheduling. A plurality of scheduling cells may be enabled to be configured for at least one of the scheduled cells.

For example, what type of scheduling method by a plurality of scheduling cells can be configured may be limited by a specific condition, or the UE capability may be defined. For example, at least one of: the number of the scheduling cells that can be configured; or the type, frequency, SCS, or the like, of the scheduled cells or the scheduling cells may be limited according to a specific condition or UE capability. The specific condition may be a condition of whether or not the cell is a P(S)Cell, whether or not the cell is an SCell, whether or not the cell is a PUCCH cell, whether or not the cell is a cell of a specific FR, whether or not the cell is a cell of a specific SCS, whether or not the cell is a cell of a licensed frequency, whether or not the cell is a cell of an unlicensed frequency, whether or not the cell is a cell for which a specific search space is configured, whether or not the cell is a cell for which a specific search space is not configured, or the like.

Here, how to support the multi-carrier scheduling including an unlicensed cell has been unclear. The unlicensed cell may mean a cell that uses an unlicensed frequency. Hereinafter, the unlicensed cell is also referred to as an unlicensed frequency cell.

For example, in a case where the scheduling cell that is a cell used for PDCCH transmission and reception is an unlicensed cell, if a PDCCH transmission cannot be performed according to the LBT result, the PDSCH transmission using a plurality of cells or a plurality of CCs cannot be performed either.

For example, in a case where an unlicensed cell is included in the scheduling cell that is a cell used for PDSCH/PUSCH transmission and reception, there may be a case in which transmission can be performed in some cells (licensed cells or LBT-successful unlicensed cells) according to the LBT result and transmission cannot be performed in the remaining cells (LBT-failed unlicensed cells).

For example, in a case where the PUCCH cell that is a cell used for transmission and reception of HARQ-ACK corresponding to PDSCH is an unlicensed cell, there may be a case in which HARQ-ACK transmission cannot be performed according to the LBT result.

Accordingly, the terminal operation and the base station configuration in a case where an unlicensed cell is involved in the single DCI multi-carrier PDSCH/PUSCH scheduling will be clarified.

For example, whether each of the unlicensed frequency (shared spectrum channel access operation frequency) cells in the single DCI multi-carrier PDSCH/PUSCH scheduling can be or cannot be configured as a scheduling cell may be defined.

For example, whether each of the unlicensed frequency cells in the single DCI multi-carrier PDSCH/PUSCH scheduling can be or cannot be configured as a scheduled cell may be defined.

For example, in a case where at least one unlicensed frequency cell is included in the scheduled cells, the multi-channel access method that can be or cannot be applied to each of the unlicensed frequency cells may be defined.

For example, an operation may be defined for a case where an enhanced Type 2 HARQ codebook (enhanced dynamic codebook) is configured and the scheduled cell candidates include both an unlicensed frequency cell and a licensed frequency cell.

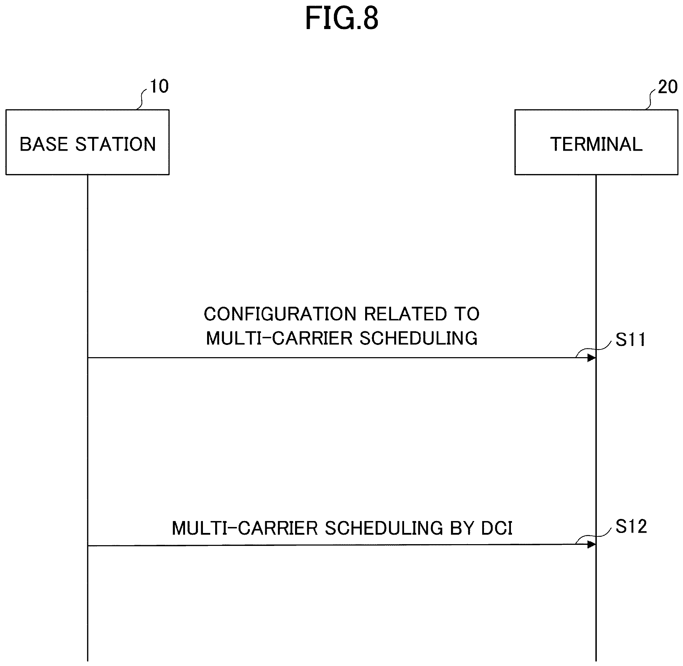

Fig. 8 is a sequence diagram illustrating an example of a scheduling operation in an embodiment of the present invention. In step S11, the base station 10 transmits a configuration related to the multi-carrier scheduling to the terminal 20. In subsequent step S12, the base station 10 performs multi-carrier scheduling for the terminal 20 by using a DCI to which the above-described configuration is applied. The configuration that is performed from the base station 10 to the terminal 20 in an embodiment of the present invention may be performed in step S11.

For example, the above-described configuration transmitted from the base station 10 to the terminal 20 may be indicated by any one of RRC (Radio Resource Control) signaling, SIB (System Information Block), MAC-CE (Medium Access Control - Control Element) and DCI, or may be indicated by a combination of a plurality of signaling methods.

For example, whether each of the unlicensed frequency (shared spectrum channel access operation frequency) cells in the single DCI multi-carrier PDSCH/PUSCH scheduling can be or cannot be configured as a scheduling cell may be defined as described in the following Option 1) or Option 2). The terminal 20 may determine, based on the definition, whether an unlicensed frequency cell can be or cannot be configured as a scheduling cell.

Option 1) An unlicensed cell may be defined to be incapable of being configured as a scheduling cell.

Option 2) An unlicensed cell may be defined to be capable of being configured as a scheduling cell only in a case where a specific condition is satisfied. Alternatively, an unlicensed cell may be defined to be capable of being configured as a scheduling cell only in a case where a specific condition is not satisfied. For example, the specific condition may be defined as described in the following 1) to 4), or may be a combination of a plurality of the following 1) to 4).
1) A case where the terminal 20 has reported, as a UE capability, whether an unlicensed cell can be or cannot be configured as a scheduling cell to the network, and the UE capability indicates that an unlicensed cell can be configured as a scheduling cell.
2) A case where an unlicensed cell is a specific cell. For example, an unlicensed cell is a PCell. For example, an unlicensed cell is a PUCCH-SCell.
3) A case where a scheduled cell satisfies a specific condition. For example, a case where all of the scheduled cells are unlicensed cells. For example, a case where at least one scheduled cell is an unlicensed cell. For example, a case where all of the scheduled cells are within the same FR. For example, a case where all of the scheduled cells are within the same band. For example, a case where all of the scheduled cells have the same SCS. For example, a case where the SCS difference between the scheduled cells is within a predetermined range. For example, a case where the number of bands or the number of CCs of the scheduled cells is equal to or less than a predetermined number, for example, a case where all of the UL scheduled cells belong to the same TAG.
4) A case where an unlicensed cell is a specific FR. For example, a case where an unlicensed cell is FR1. For example, a case where an unlicensed cell is FR2-2.

It is to be noted that whether an unlicensed frequency can be or cannot be configured as a scheduling cell may be different, conditions may be different, or UE capabilities may be different, between the multi-carrier PDSCH scheduling and the multi-carrier PUSCH scheduling.

For example, whether each of the unlicensed frequency (shared spectrum channel access operation frequency) cells in the single DCI multi-carrier PDSCH/PUSCH scheduling can be or cannot be configured as a scheduled cell may be defined as described in the following Option 1) or Option 2). The terminal 20 may determine, based on the definition, whether an unlicensed frequency cell can be or cannot be configured as a scheduled cell.

Option 1) An unlicensed cell may be defined to be incapable of being configured as a scheduled cell.

Option 2) An unlicensed cell may be defined to be capable of being configured as a scheduled cell only in a case where a scheduling cell satisfies a specific condition. Alternatively, an unlicensed cell may be defined to be incapable of being configured as a scheduled cell only in a case where a specific condition is not satisfied. For example, the specific condition may be a case in which the scheduling cell is a licensed cell. For example, the specific condition is a case in which the scheduling cell is PCell, PSCell, or PUCCH-SCell. For example, the specific condition is a case in which the scheduling cell is a specific frequency cell. For example, the specific condition is a case in which the scheduling cell is a cell of a specific SCS.

Option 3) An unlicensed cell may be defined to be capable of being configured as a scheduled cell only in a case where a specific condition is satisfied. Alternatively, an unlicensed cell may be defined to be incapable of being configured as a scheduled cell only in a case where a specific condition is not satisfied. For example, the specific condition is a case where the terminal 20 has reported, as a UE capability, whether an unlicensed cell can be or cannot be configured as a scheduled cell to the network, and the UE capability indicates that an unlicensed cell can be configured as a scheduled cell. For example, the specific condition is a case where a scheduled cell satisfies a specific condition. For example, a case where the scheduled cell is a specific cell. For example, a case where the scheduled cell is a cell of a specific frequency. For example, a case where the scheduled cell is a cell of a specific SCS. For example, a case where there is a specific relationship between the SCS of the scheduled cell and the SCS of the scheduling cell. For example, a case where there is a specific relationship between the frequency of the scheduled cell and the frequency of the scheduling cell.

It is to be noted that whether an unlicensed frequency can be or cannot be configured as a scheduled cell may be different, conditions may be different, or UE capabilities may be different, between the multi-carrier PDSCH scheduling and the multi-carrier PUSCH scheduling.

In addition, in a case where at least one unlicensed frequency cell is included in the scheduled cells, the multi-channel access method that can be or cannot be applied to each of the unlicensed frequency cells may be defined. For example, Option 1) or Option 2) described below may be defined.

Option 1) Any one of Type A1, Type A2, Type B1, and Type B2 may be applicable for DL. LBT may be independently performed for UL in each of the unlicensed cells. In a case where a plurality of unlicensed cells are included in the scheduled cells, there may be a condition that PDSCH or PUSCH transmission start timings (COT start timings) must be aligned.

Option 2) One of or a plurality of Type A1, Type A2, Type B1, and Type B2 may be inapplicable at the configuration time of the single DCI multi-carrier PDSCH scheduling.

In addition, an operation may be defined for a case where an enhanced Type 2 HARQ codebook (enhanced dynamic codebook) is configured and the scheduled cell candidates include both an unlicensed frequency cell and a licensed frequency cell.

For example, with respect to the inapplicable value (for example, -1) for the PDSCH-to-HARQ feedback indicator, the following 1) to 3) may be defined. It is to be noted that the PDSCH-to-HARQ feedback indicator for a licensed frequency and the PDSCH-to-HARQ feedback indicator for an unlicensed frequency may be indicated separately.
1) Defined to be incapable of being used.
2) Defined to be capable of being used only in a case where a specific condition is satisfied. For example, the inapplicable value may be capable of being used only in a case where the scheduled cells include only unlicensed frequencies and the inapplicable value is supported in all of the corresponding bands.
3) May be defined to be capable of being used according to the UE capability indicating whether or not the inapplicable value is supported.

In addition, with respect to the PDSCH group index, the following 1) to 3) may be defined.
1) Only the PDSCH group index that is common to all of the PDSCHs (licensed cells and unlicensed cells) may be indicated by DCI.
2) PDSCH group indexes that are different between unlicensed cells and licensed cells may be indicated by DCI.
3) PDSCH group index may be indicated by DCI for each cell or for a plurality of cells that are grouped in advance.

According to an embodiment of the present invention, the base station 10 and the terminal 20 can reduce the scheduling and processing load by performing the multi-carrier scheduling in the unlicensed frequency band.

In other words, multi-carrier scheduling can be performed in an unlicensed band.

### (Device configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only some of the functions in an embodiment.

### <Base station 10>

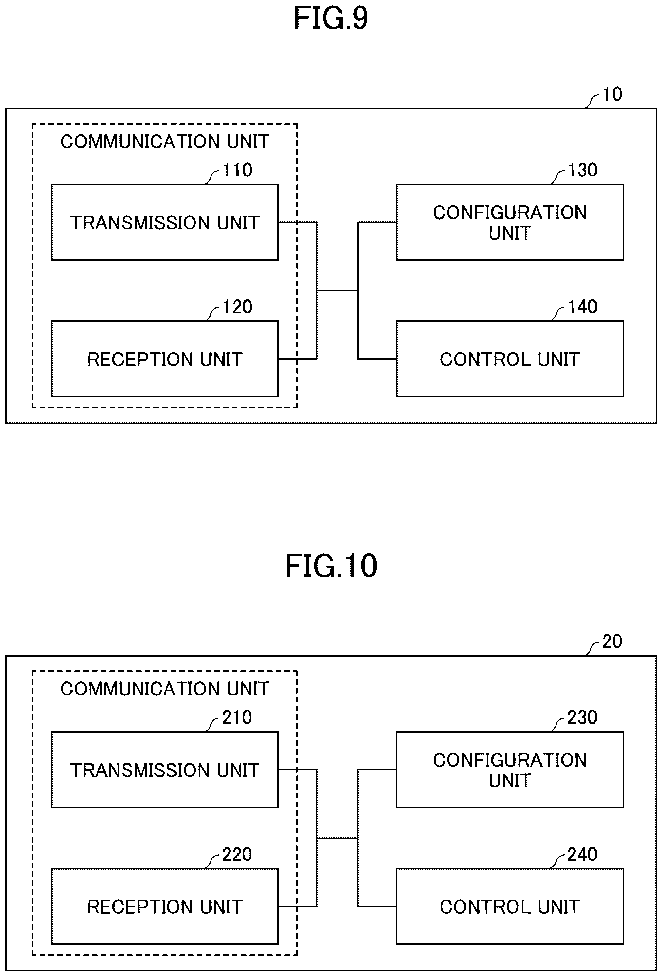

Fig. 9 is a drawing illustrating an example of a functional structure of a base station 10 according to an embodiment of the present invention. As shown in Fig. 9, the base station 10 includes a transmission unit 110, a reception unit 120, a configuration unit 130, and a control unit 140. The functional configuration illustrated in Fig. 9 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, information related to the multi-carrier scheduling, or the like.

The control unit 140 performs control related to the multi-carrier scheduling as described in an embodiment of the present invention. The functional units related to signal transmission in the control unit 140 may be included in the transmission unit 110, and the functional units related to signal reception in the control unit 140 may be included in the reception unit 120.

### <Terminal 20>

Fig. 10 is a drawing illustrating an example of a functional structure of a terminal 20 according to an embodiment of the present invention. As shown in Fig. 10, the terminal 20 includes a transmission unit 210, a reception unit 220, a configuration unit 230, and a control unit 240. The functional configuration illustrated in Fig. 10 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains upper layer signals from the received physical layer signals. Further, the reception unit 220 has a function for receiving NR-PSS, NR-SSS, NR-PBCH, DL/UL/SL control signals, etc., transmitted from the base station 10. Further, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, or PSBCH.

The configuration unit 230 stores various configuration information items received by the reception unit 220 from the base station 10. In addition, the configuration unit 230 also stores pre-configured configuration information. Contents of the configuration information are, for example, information related to the multi-carrier scheduling, or the like.

The control unit 240 performs control related to the multi-carrier scheduling as described in an embodiment of the present invention. The functional units related to signal transmission in the control unit 240 may be included in the transmission unit 210, and the functional units related to signal reception in the control unit 240 may be included in the reception unit 220.

### (Hardware structure)

In the above block diagrams used for describing an embodiment of the present invention (Fig. 9 and Fig. 10), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

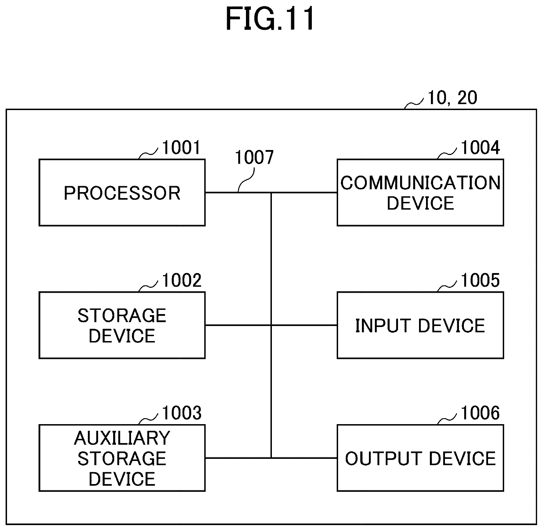

For example, the base station 10, the terminal 20, etc., according to an embodiment of the present disclosure may function as a computer for processing the radio communication method of the present disclosure. Fig. 11 is a drawing illustrating an example of hardware structures of the base station 10 and the terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "device" can be read as a circuit, a device, a unit, etc. The hardware structures of the base station 10 and the terminal 20 may include one or more of each of the devices illustrated in the figure, or may not include some devices.

Each function in the base station 10 and the terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 9 may be realized by control programs that are stored in the storage device 1002 and are executed by the processor 1001. Further, for example, the control unit 240 of the terminal 20 illustrated in Fig. 10 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disc, digital versatile disc, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission or reception device) for communicating with computers via at least one of a wired network or a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) or a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

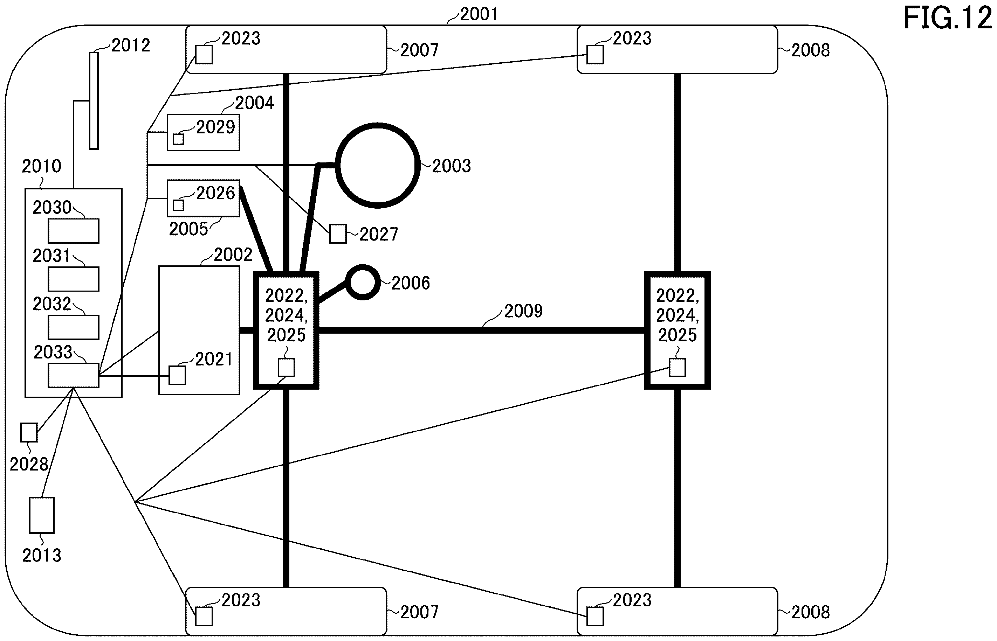

Fig. 12 shows an example of a configuration of a vehicle 2001. As shown in Fig. 12, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (e.g., a keyboard, mouse, microphone, switch, button, sensor, touch panel, etc.) that accepts an external input, or may include an output device (e.g., a display, speaker, LED lamp, touch panel, etc.) that implements an external output.

A driving support system unit 2030 includes: various devices for providing functions of preventing accidents and reducing a driver's operating burden such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit, to an external device by using wireless communications, at least one of: a signal from the above-described various sensors 2021 to 2028 that is input to the electronic control unit 2010; information that is obtained based on the signal; or information based on an input obtained from outside (user) via the information service unit 2012. The electronic control unit 2010, the various sensors 2021 to 2028, the information service unit 2012, or the like, may be referred to as an input unit for receiving an input. For example, PUSCH transmitted by the communication module 2013 may include information based on the above-described input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit for outputting information (for example, outputting information to devices such as a display or a speaker, based on PDSCH (or data/information decoded from the PDSCH) received by the communication module 2013). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a terminal is provided. The terminal includes: a control unit configured to assume that there are a scheduling cell and a scheduled cell in multi-carrier scheduling by single control information; and a reception unit configured to receive the single control information from the scheduling cell. The reception unit receives a plurality of scheduled cells based on the single control information, and the control unit determines whether or not an unlicensed frequency cell can be configured as the scheduling cell.

According to the above-described configuration, the base station 10 and the terminal 20 can reduce the scheduling and processing load by performing the multi-carrier scheduling in the unlicensed frequency band. In other words, multi-carrier scheduling can be performed in an unlicensed band.

The control unit may determine that the unlicensed frequency cell cannot be configured as the scheduling cell. According to the above-described configuration, the base station 10 and the terminal 20 can reduce the scheduling and processing load by performing the stable multi-carrier scheduling in the unlicensed frequency band.

The control unit may determine that the unlicensed frequency cell can be configured as the scheduling cell in a case where the unlicensed frequency cell satisfies a specific condition. According to the above-described configuration, the base station 10 and the terminal 20 can reduce the scheduling and processing load by performing the stable multi-carrier scheduling in the unlicensed frequency band.

The specific condition may be a condition that the unlicensed frequency cell is a primary cell. According to the above-described configuration, the base station 10 and the terminal 20 can reduce the scheduling and processing load by performing the stable multi-carrier scheduling in the unlicensed frequency band.

In addition, according to an embodiment of the present invention, a base station is provided. The base station includes: a control unit configured to assume that there are a scheduling cell and a scheduled cell in multi-carrier scheduling by single control information; and a transmission unit configured to transmit the single control information from the scheduling cell. The transmission unit transmits a plurality of scheduled cells based on the single control information, and the control unit determines whether or not an unlicensed frequency cell can be configured as the scheduling cell.

According to the above-described configuration, the base station 10 and the terminal 20 can reduce the scheduling and processing load by performing the multi-carrier scheduling in the unlicensed frequency band. In other words, multi-carrier scheduling can be performed in an unlicensed band.

In addition, according to an embodiment of the present invention, a communication method performed by a terminal is provided. The communication method includes: assuming that there are a scheduling cell and a scheduled cell in multi-carrier scheduling by single control information; receiving the single control information from the scheduling cell; receiving a plurality of scheduled cells based on the single control information; and determining whether or not an unlicensed frequency cell can be configured as the scheduling cell.

According to the above-described configuration, the base station 10 and the terminal 20 can reduce the scheduling and processing load by performing the multi-carrier scheduling in the unlicensed frequency band. In other words, multi-carrier scheduling can be performed in an unlicensed band.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling), broadcast information (MIB (Master Information Block), SIB (System Information Block)), other signals, or a combination thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer or a decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE or LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, and each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, a transmission of information from the base station to the terminal may be replaced with an indication of control or operation from the base station to the terminal based on the information.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmission apparatus, reception apparatus, communication apparatus, or the like. The at least one of the base station or the mobile station may be a device mounted on the mobile station, the mobile station itself, or the like. The mobile station is an object that can move, and the moving speed can be any speed. In addition, a mobile station that is not moving is also included. The mobile station includes, but is not limited to, a vehicle, a transport vehicle, an automobile, a motorcycle, a bicycle, a connected car, an excavator, a bulldozer, a wheel loader, a dump truck, a forklift, a train, a bus, a rear car, a rickshaw, a ship and other watercraft, an airplane, a rocket, an artificial satellite, a drone (registered trademark), a multi-copter, a quadcopter, a balloon, and an object mounted thereon. In addition, the mobile station may be a mobile station that autonomously travels based on an operation command. The mobile station may be a vehicle (e.g., a car, an airplane, etc.), an unmanned mobile station (e.g., a drone, an automated vehicle, etc.), or a robot (manned or unmanned). At least one of the base station or the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The terms "determination" and "decision" may include "determination" and "decision" made with judging, calculating, computing, processing, deriving, investigating, searching (looking up, search, inquiry) (e.g., search in a table, a database, or another data structure), or ascertaining. Further, the "determining" may include "determining" made with receiving (e.g., receiving information), transmitting (e.g., transmitting information), inputting, outputting, or accessing (e.g., accessing data in a memory). Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission or reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, or specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a UE, one or more BWPs may be configured in one carrier.

At least one of the configured BWPs may be activated, and the UE may assume that the UE will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Storage device
1003 Auxiliary storage device
1004 Communication device
1005 Input device
1006 Output device
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a control unit configured to assume that there are a scheduling cell and a scheduled cell in multi-carrier scheduling by single control information; and
a reception unit configured to receive the single control information from the scheduling cell, wherein
the reception unit receives a plurality of scheduled cells based on the single control information, and
the control unit determines whether or not an unlicensed frequency cell can be configured as the scheduling cell.

2. The terminal as claimed in claim 1, wherein
the control unit determines that the unlicensed frequency cell cannot be configured as the scheduling cell.

3. The terminal as claimed in claim 1, wherein
the control unit determines that the unlicensed frequency cell can be configured as the scheduling cell in a case where the unlicensed frequency cell satisfies a specific condition.

4. The terminal as claimed in claim 3, wherein
the specific condition is a condition that the unlicensed frequency cell is a primary cell.

5. A base station comprising:
a control unit configured to assume that there are a scheduling cell and a scheduled cell in multi-carrier scheduling by single control information; and
a transmission unit configured to transmit the single control information from the scheduling cell, wherein
the transmission unit transmits a plurality of scheduled cells based on the single control information, and
the control unit determines whether or not an unlicensed frequency cell can be configured as the scheduling cell.

6. A communication method performed by a terminal, the communication method comprising:
assuming that there are a scheduling cell and a scheduled cell in multi-carrier scheduling by single control information;
receiving the single control information from the scheduling cell;
receiving a plurality of scheduled cells based on the single control information; and
determining whether or not an unlicensed frequency cell can be configured as the scheduling cell.
